# EUROPEAN PATENT APPLICATION

(11) **EP 1 061 403 A2**
(43) Date of publication of application: **20.12.2000**
(21) Application number: 00112718.2
(22) Date of filing: 15.06.2000
(51) Int. Cl.: G02F 1/1333

(54) **Liquid crystal display device and its process of production**

(30) Priority: 18.06.1999 JP 17284299
(71) Applicant: SONY CORPORATION, Tokyo (JP)
(72) Inventor: Fukumoto, Hirohide, c/o Sony Kokubu Corporation, Kokubu-shi, Kagoshima-ken (JP)
(74) Representative: MÜLLER & HOFFMANN Patentanwälte

(57) **Abstract**

An alignment film having no unevenness in the film thickness is formed on an electrode substrate having a spacer. A material for an alignment film is transferred on a TFT substrate by using a printing plate having a concave part formed thereon at a part corresponding to a spacer on the TFT substrate, or the preliminary drying after transferring is conducted at a low temperature of from 20 to 30°C. Furthermore, in alternative, the thickness of the material for the alignment film coated on the TFT substrate having the spacer is 80 nm or more, which is thicker than the ordinary manner.

## Description

### BACKGROUND OF THE INVENTION

### 1. Field of the Invention

The present invention relates to a process for producing a liquid crystal display device (LCD), and more particularly, to a process for forming an alignment film on a substrate, on one surface of which a spacer for maintaining a gap of substrates, between which a liquid crystal layer is maintained, is provided, and a liquid crystal display device.

### 2. Description of the Related Art

In recent years, an active matrix type liquid crystal display device using a thin film transistor (TFT) is being developed. The liquid crystal display device is constituted with an accumulated body comprising a transparent substrate (hereinafter referred to as a TFT substrate), such as a glass substrate, having a thin film transistor and a pixel electrode, a counter electrode substrate having a counter electrode formed thereon, and a liquid crystal layer intervening therebetween through alignment films, respectively, and spacers are arranged as dispersed to make constant the gap between the substrates.

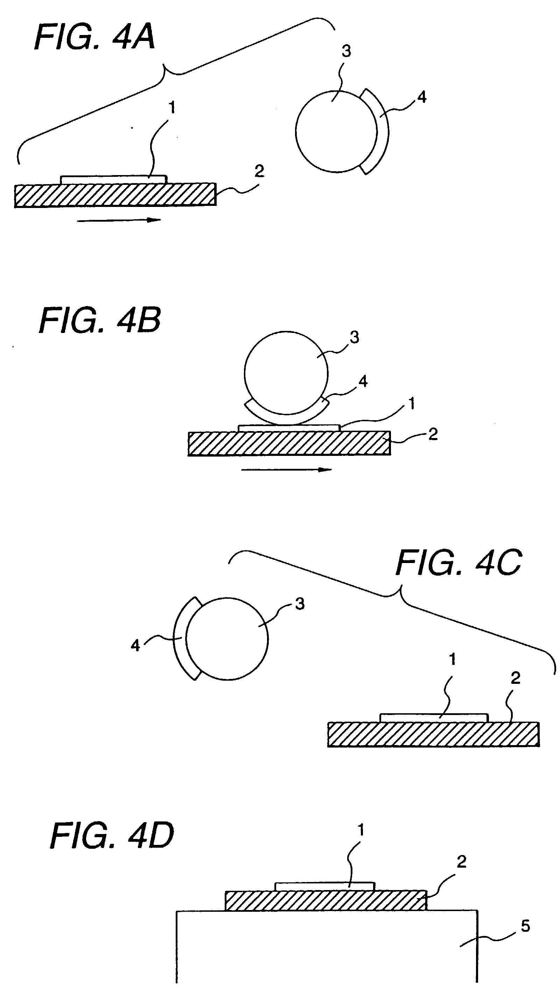

The alignment film in the accumulated body is generally formed by transferring and coating on the substrate by a printing method. As a material for the alignment film, polyimide and polyvinyl alcohol are used. Figs. 4A to 4D show a procedure for forming an alignment film on an electrode substrate, such as a TFT substrate, in which a stage 2 carrying a TFT substrate 1 is moved to a roll coater 3 in Fig. 4A, and a material for an alignment film is transferred to the TFT substrate 1 with a printing plate 4 by rotating the roll coater 3 in Figs. 4B to 4C. In Fig. 4D, the alignment film coated on the TFT substrate 1 is then subjected to preliminary drying, for example, on a hot plate 5, so as to evaporate a solvent in the material for an alignment film. Thereafter, the material for an alignment film is completely polymerized by baking the TFT substrate 1 at a high temperature to form an alignment film comprising a polymer resin.

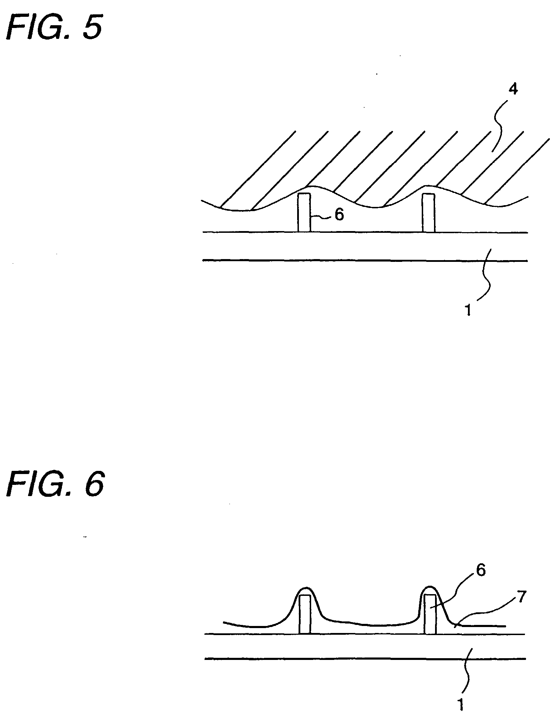

In the case where a spacer 6 for maintaining the distance between the substrate constant is provided on the TFT substrate 1 as shown in Fig. 5, when a material for an alignment film 7 is transferred by a conventional printing plate 4, unevenness in the film thickness is caused because the spacer 6 of several micrometers is present as shown in Fig. 6, so as to cause a problem in that unevenness in display occurs in a liquid crystal display device.

### SUMMARY OF THE INVENTION

The invention is developed to solve the problem, and an object thereof is to provide a process for producing a liquid crystal display in that an alignment film without unevenness in film thickness can be formed on an electrode substrate having a spacer, and a liquid crystal display device relating thereto.

That is, the invention relates to, as a first aspect, a process for producing a liquid crystal display device comprising substrates arranged to face each other maintaining a constant distance by a gap maintaining part, between which a liquid crystal layer is maintained through an alignment film, the process comprising a step of coating a material for the alignment film on the substrate having the gap maintaining part by using a printing plate having a concave part interfitting with the gap maintaining part.

In the first aspect of the invention, in the case where a gap maintaining part for maintaining a distance of the electrode substrate retaining the liquid crystal layer by sandwiching, i.e., a so-called spacer, is formed on one of the electrode substrates, the material for the alignment film is transferred to the electrode substrate having the spacer by the printing plate having a concave part interfitting with the spacer, whereby the material for the alignment film is coated on the part on the substrate other than the spacer, so as to form the alignment film having no unevenness in film thickness on the substrate.

The invention also relates to, as a second aspect, a process for producing a liquid crystal display device comprising substrates arranged to face each other maintaining a constant distance by a gap maintaining part, between which a liquid crystal layer is maintained through an alignment film, the process comprising a step of, after coating a material for the alignment film on the substrate having the gap maintaining part, drying the coated material for the alignment film at a temperature of from 20 to 30°C.

In the second aspect of the invention, the material for the alignment film coated on the substrate is slowly dried at a temperature lower than the ordinary drying temperature, whereby the material for the alignment film is leveled to a constant thickness, so as to suppress the unevenness in film thickness.

The invention also relates to, as a third aspect, a process for producing a liquid crystal display device comprising substrates arranged to face each other maintaining a constant distance by a gap maintaining part, between which a liquid crystal layer is maintained through an alignment film, a thickness of the material for the alignment film coated on the substrate having the gap maintaining part being larger than a thickness of the material for the alignment film coated on the substrate not having the gap maintaining part.

In the third aspect of the invention, it is preferred that the thickness of the material for the alignment film coated on the substrate having the gap maintaining part is 80 nm or more.

In the third aspect of the invention, the material for the alignment film is coated to a thickness larger than the ordinary manner, so as to suppress the unevenness in film thickness.

The invention further relates to an LCD relating to the processes for producing a liquid crystal display device.

In the LCD of the invention, the distance between the substrates is constant to suppress the unevenness in display.

### BRIEF DESCRIPTION OF THE DRAWINGS

Fig.1 is a cross sectional view showing a coating step of an alignment film in the process for producing a liquid crystal display device of the invention.
Fig. 2 is a cross sectional view showing an alignment film coated by a printing plate according to the invention.
Fig. 3 is a cross sectional view explaining that a process of coating an alignment film thick according to the invention suppresses the unevenness in film thickness.
Figs. 4A to 4D are diagrams schematically showing a forming process of an alignment film in a process for producing a liquid crystal display device.
Fig. 5 is a diagram schematically showing a cross section on coating an alignment film on a TFT substrate having a spacer in the conventional process.
Fig. 6 is a diagram schematically showing a cross section of an alignment film coated by the conventional process.

### DESCRIPTION OF THE PREFERRED EMBODIMENT

An embodiment of the invention will be described with reference to the drawing below.

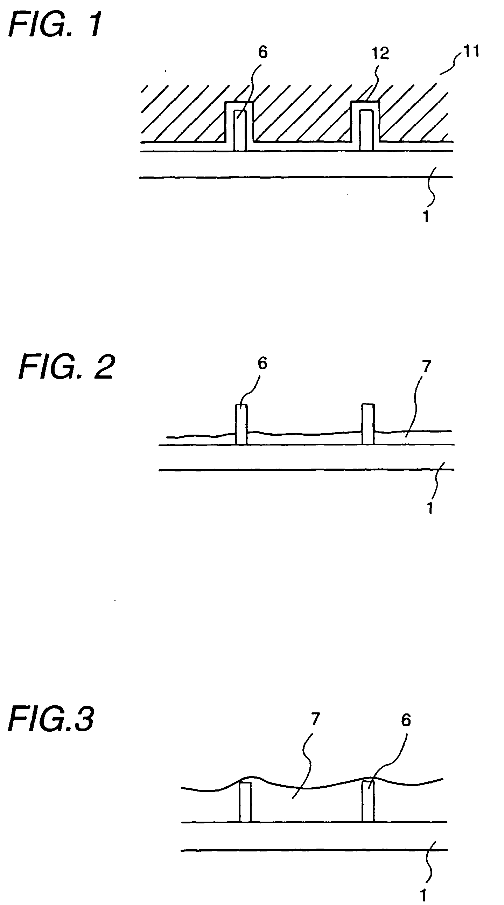

Fig. 1 shows one embodiment of a forming step of an alignment film in the process for producing a liquid crystal display of the invention, in which on transferring an alignment film by a printing plate 11, a concave part 12 is formed at a part in contact with a spacer 6 formed on a TFT substrate 1, for example, by patterning a photoresist.

That is, in this embodiment, a material for the alignment film 7 is transferred to the TFT substrate 1 by using the printing plate 11 having the concave part 12 as shown in Fig. 1. At this time, because the spacer 6 protruding from the surface of the TFT substrate 1 enters into the concave part 12 of the printing plate 11, the material for the alignment film 7 is coated on the TFT substrate 1 to a substantially uniform thickness without covering the spacer 6 as shown in Fig. 2. According to this manner, unevenness in the film thickness of the alignment film formed on the TFT substrate 1 having the spacer 6 can be largely improved.

When the preliminary drying after coating the material for the alignment film 7 is conducted at a high temperature, a solvent is momentarily evaporated to often cause unevenness in the film thickness. In this embodiment, therefore, the material for the alignment film 7 is transferred to the TFT substrate 1 by using the printing plate having the concave part as shown in Fig. 1, and at the same time, the preliminary drying after transferring is conducted on a hot plate at a low temperature, preferably from 20 to 30°C. By conducting the preliminary drying at a temperature lower than the conventional manner, the unevenness in the film thickness of the alignment film can further be suppressed. Furthermore, the preliminary drying at such a low temperature can be not only applied to the case where the material for the alignment film 7 is transferred to the TFT substrate 1 by using the printing plate having the concave part, but also widely applied to the case where the material for the alignment film 7 is transferred to the TFT substrate 1 by using an ordinary printing plate having no concave part.

In order to reduce the dispersion of the thickness of the alignment film, the thickness of the material for the alignment film 7 to be coated is made thicker than the conventional manner, preferably 80 nm or more. According to this manner, the difference between the film thickness at the part of the spacer 6 and the film thickness at the other part can be decreased, and the unevenness in the film thickness of the alignment film can further be suppressed. Furthermore, the method where the thickness of the material for the alignment film 7 to be coated is made thicker can be not only applied to the case where the material for the alignment film 7 is transferred to the TFT substrate 1 by using the printing plate having the concave part, but also widely applied to the case where the material for the alignment film 7 is transferred to the TFT substrate 1 by using an ordinary printing plate having no concave part.

Thereafter, an alignment film is also formed on the counter electrode substrate, which is superimposed on the TFT substrate having the alignment film formed thereon, and then a liquid crystal layer is sealed inside the substrates, so as to complete an LCD according to the invention.

As clear from the description above, according to this embodiment, the unevenness in film thickness at the part of the spacer occurring in the TFT substrate having the spacer can be easily improved only by changing the printing plate, the preliminary drying conditions or the film thickness with the use of the conventional apparatus for forming a liquid crystal alignment film as it is, whereby the display performance of the liquid crystal display device can be greatly improved.

While the object, on which the alignment film is formed, is a TFT substrate having a spacer in the embodiment in the foregoing, it is not limited thereto, and the process of the invention can be applied to any electrode substrate having a spacer thereon, on which an alignment film is to be formed.

As described in the foregoing, according to the first aspect of the invention, in the case where a spacer is attached on an electrode substrate, on which an alignment film is to be formed, a concave part corresponding to the spacer is provided in a printing plate as coating means of the alignment film, and a material for the alignment film is transferred to the substrate having the spacer by using the printing plate, whereby the unevenness in the film thickness of the alignment film due to the spacer can be suppressed, so as to produce a liquid crystal display device excellent in display performance without unevenness in display.

According to the second aspect of the invention, the preliminary drying after coating the material for the alignment film is conducted at a low temperature, whereby the unevenness in the film thickness of the alignment film can be suppressed.

According to the third aspect of the invention, the thickness of the material for the alignment film coated on the substrate having a spacer is made thicker than the ordinary manner, whereby the unevenness in the film thickness of the alignment film can further be suppressed.

According to the LCD relating to the first to third aspects of the invention, an LCD without unevenness in display can be provided.

## Claims

1. A process for producing a liquid crystal display device comprising substrates arranged to face each other maintaining a constant distance by a gap maintaining part, between which a liquid crystal layer is maintained through an alignment film,
said process comprising a step of coating a material for said alignment film on said substrate having said gap maintaining part by using a printing plate having a concave part interfitting with said gap maintaining part.

2. A process for producing a liquid crystal display device as claimed in claim 1, wherein
said process comprises a step of drying said coated material for said alignment film at a temperature of from 20 to 30°C.

3. A process for producing a liquid crystal display device as claimed in claim 1, wherein
a thickness of said material for said alignment film coated on said substrate having said gap maintaining part is larger than a thickness of said material for said alignment film coated on said substrate not having said gap maintaining part.

4. A process for producing a liquid crystal display device as claimed in claim 3, wherein
said thickness of said material for said alignment film coated on said substrate having said gap maintaining part is 80 nm or more.

5. A process for producing a liquid crystal display device comprising substrates arranged to face each other maintaining a constant distance by a gap maintaining part, between which a liquid crystal layer is maintained through an alignment film,
said process comprising a step of, after coating a material for said alignment film on said substrate having said gap maintaining part, drying said coated material for said alignment film at a temperature of from 20 to 30°C.

6. A process for producing a liquid crystal display device comprising substrates arranged to face each other maintaining a constant distance by a gap maintaining part, between which a liquid crystal layer is maintained through an alignment film,
a thickness of said material for said alignment film coated on said substrate having said gap maintaining part being larger than a thickness of said material for said alignment film coated on said substrate not having said gap maintaining part.

7. A process for producing a liquid crystal display device as claimed in claim 6, wherein
said thickness of said material for said alignment film coated on said substrate having said gap maintaining part is 80 nm or more.

8. A liquid crystal display comprising
a first substrate having a gap maintaining part and having a material for an alignment film coated thereon;
a second substrate having a material for an alignment film coated thereon and facing said first substrate maintaining a constant distance by said gap maintaining part; and
a liquid crystal layer maintained inside said substrates,
wherein a thickness of said material for said alignment film coated on said first substrate is larger than a thickness of said material for said alignment film coated on said second substrate.
